# EUROPEAN PATENT APPLICATION

(11) **EP 0 683 402 A2**
(43) Date of publication of application: **22.11.1995**
(21) Application number: 95300837.2
(22) Date of filing: 10.02.1995
(51) Int. Cl.: G02B 5/08, B32B 17/10

(54) **A method of making an optical component having specular reflective properties and an optical component formed thereby**

(30) Priority: 19.05.1994 GB 9410056
(71) Applicant: SPAFAX INTERNATIONAL LIMITED, Melksham, Wiltshire SN12 6TP (GB)
(72) Inventor: Norman, Timothy Hugh, Linthigow, West Lothian EH49 6PQ (GB)
(74) Representative: Carmichael, David Andrew Halliday

(57) **Abstract**

A method of making an optical component having specular reflective properties comprising forming a membrane by applying to an optical grade plastics material a coating of reflective material, applying a protective coating to the reflective material, bonding the membrane so formed to a correspondingly formed surface on a base member with the reflective material adjacent to the base member.

## Description

The present invention relates to a method of making an optical component having specular reflective properties and an optical component formed thereby.

The invention is more particularly concerned with producing a shatterproof mirror which is particularly suitable for use on vehicles which exhibits high reflectivity, good optical clarity and will meet EC directives.

According to one aspect of the present invention a method of making an optical component having specular reflective properties comprises forming a membrane by applying to an optical grade plastics material a coating of reflective material, applying a protective coating to the reflective material, bonding the membrane so formed to a correspondingly formed surface on a base member with the reflective material adjacent to the base member.

The plastics material is preferably polycarbonate film and the reflective material is preferably aluminium and may be applied by evaporation under high vacuum.

The membrane preferably has an abrasion resistant coating on its surface opposite that to which the reflective material is applied.

The membrane is preferably in the region of 500 microns thick.

The aluminium is preferably deposited to a thickness of approximately 500 Angstroms and protected against atmospheric corrosion by means of a protective layer such as a silicon oxide coating.

The membrane is conveniently bonded to the base member by use of a transfer adhesive to form the complete optical component .

The membrane may conveniently be coated with the transfer adhesive and also a backing member, the backing member being removed when the membrane is to be applied to the moulding. The membrane may be applied to the surface by means of pressure pads.

Preferably the surface to which the membrane is applied is recessed in the moulding and the membrane is dimensioned so as to project slightly above the recess so that even pressure can be applied by the pressure pads which also can shape the membrane to the shape of the surface which may for example be convex.

The thickness of the membrane is such that the optical quality of the mirror is not affected by the slight distortion caused by applying a flat membrane to a curved surface.

The invention also includes an optical component having specular reflective properties and made by the method set forth.

According to another aspect of the invention an optical component having specular reflective properties comprises a membrane formed by a layer of polycarbonate, applied to which is a layer of aluminium, protected by a protective coating and which is adhered to a base member.

Preferably the layer of polycarbonate is protected on its side remote from the aluminium coating by an abrasion resistant layer.

The membrane is preferably located in a recess in the base member and projects slightly above the recess.

The membrane preferably has a gap between it and the walls of the recess and a silicon sealant is applied to prevent the ingress of moisture etc.

The invention may be performed in various ways and one specific embodiment will now be described by way of example with reference to the accompanying drawings in which:
Figure 1 is a schematic view of a membrane for application to a base member and:
Figure 2 is a cross-section of a membrane applied to a base member.

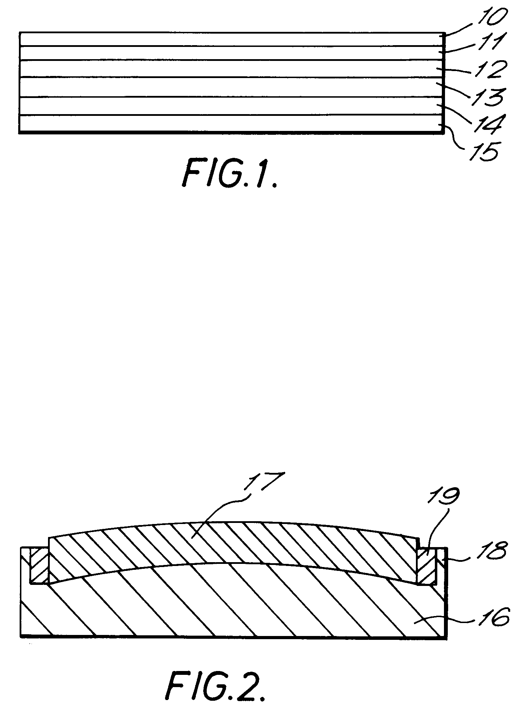

The membrane shown in Figure 1 is formed as follows:-

A sheet of optical grade polycarbonate approximately 500 microns thick is put into a vacuum chamber. This sheet has previously been coated on one side with an abrasion resistant coating, and the unprotected side is to be coated. The vacuum in the chamber is then lowered to approximately 10⁻⁴ millibars and pure aluminium is evaporated in the chamber to form a layer on the exposed side of the sheet of approximately 500 Angstroms. The deposition of aluminium is then stopped and a silicon oxide protective coating is also applied by evaporation onto the layer of aluminium.

The membrane so formed is then removed from the chamber and is coated with a transfer adhesive. This is applied by passing it under a roller where a strip of transfer adhesive applied to a backing member is rolled on to it so that the layer of silicon oxide has the transfer adhesive applied to it.

The membrane so formed is shown in Figure 1 and the layers are shown as follows, 10 is the abrasion resistant coating, 11 is the polycarbonate layer, 12 is the aluminium layer, 13 is the silicon oxide layer, 14 is the transfer adhesive and 15 is the backing strip.

Before application to the base moulding, the strip with the transfer adhesive is cut into appropriate lengths, and widths if necessary, to fit into a base member. The base member is in the form of a moulding manufactured from shatterproof materials such as polycarbonate, ABS or polypropylene.

The base moulding is in the shape of for example the rear view mirror for a vehicle, with one surface of suitable optical form to which the reflective membrane may be applied. The other surfaces may be aerodynamically and aesthetically shaped to give the required appearance, and the moulding may be suitably formed with means by which it can be attached to a vehicle.

The base moulding is shown diagrammatically in Figure 2. In this base moulding is shown at 16 and has a surface 17 of optical quality to which the membrane is applied. This is achieved by removing the backing strip and applying the exposed transfer adhesive 14 to the surface 17. The surface 17 is recessed below the rim of the mirror so that there is a peripheral wall 18 around the edge of the moulding.

The membrane is dimensioned so that when it is inserted its peripheral edge is spaced from the wall 18 by a small gap of approximately 0.8 mm. The depth of the recess is also slightly less than the thickness of the membrane so that the membrane projects very slightly above the top surface 19 of the wall 18. In practice the depth of the recess is 0.4 mm and the thickness of the membrane is 0.5 mm so that there will be projection of the order of 0.1 mm.

The projection ensures that when the membrane is applied a continuous pressure point can be applied across the surface. The bonding of the membrane to moulding is effected by inverting the moulding and applying to it the exposed transfer adhesive which faces upwards and is located by suitable means e.g. suction pads. The membrane is then smoothed by pressure pads and moulded to the membrane by the pressure. The gap allows for tolerances and the silicon sealant seals the membrane against ingress of moisture etc.

A mirror made in accordance with the above method placed in a concentrated saline solution for a period of six months showed no penetration at all.

## Claims

1. A method of making an optical component having specular reflective properties comprising forming a membrane by applying to an optical grade plastics material a coating of reflective material, applying a protective coating to the reflective material, bonding the membrane so formed to a correspondingly formed surface on a base member with the reflective material adjacent to the base member.

2. A method as claimed in Claim 1, in which the plastics material is polycarbonate film and the reflective material is aluminium applied by evaporation under high vacuum.

3. A method as claimed in Claim 1 or Claim 2, in which the membrane has an abrasion resistant coating on its surface opposite that to which the reflective material is applied.

4. A method as claimed in Claim 2 or Claim 3, in which the membrane is in the region of 500 microns thick and the aluminium is deposited to a thickness of approximately 500 Angstroms and protected against atmospheric corrosion by means of a protective layer such as a silicon oxide coating.

5. A method as claimed in any one of the preceding Claims, in which the membrane is bonded to the base member by use of a transfer adhesive to form the complete optical components.

6. A method as claimed in any one of the preceding Claims, in which the membrane is coated with the transfer adhesive and also a backing member, the backing member being removed when the membrane is to be applied to the moulding.

7. A method as claimed in any one of the preceding claims, in which the the surface to which the member is applied is recessed in the moulding and the membrane is dimensioned so as to project slightly above the recess so that even pressure can be applied by pressure pads which also can shape the membrane to the shape of the surface.

8. An optical component having specular reflective properties made by the method as claimed in any one of the preceding Claims.

9. An optical component having specular reflective properties comprising a membrane formed by a layer polycarbonate applied to which is a layer of aluminium protected by a protective coating and which is adhered to a base member.

10. An optical component as claimed in Claim 9, in which the layer of polycarbonate is protected on its side remote from the aluminium coating by an abrasion resistant layer.

11. An optical component as claimed in Claim 9 or Claim 10, in which the membrane is located in a recess in the base member and projects slightly above the recess.

12. An optical component as claimed in Claim 11, in which the membrane has a gap between it and the walls of the recess and a silicon sealant is applied to prevent the ingress of moisture etc.
